# EUROPEAN PATENT APPLICATION

(11) **EP 3 932 659 A1**
(43) Date of publication of application: **05.01.2022**
(21) Application number: 19917059.8
(22) Date of filing: 28.02.2019
(51) Int. Cl.: B32B 7/022, B32B 7/12, B32B 38/00, B32B 1/00, B29C 43/20, B60R 1/00, B29C 43/58

(54) **WATER REPELLENT FILM FOR CAR SIDE-VIEW MIRROR, AND MOLDING APPARATUS THEREFOR**

(71) Applicant: Realook & Company Co., Ltd., Gyeonggi-do 16954 (KR)
(72) Inventor: LIM, Nam IL, Suwon-si Gyeonggi-do 16514 (KR)
(74) Representative: Stöckeler, Ferdinand
(86) International application number: PCT/KR2019/002429
(87) International publication number: WO 2020/175723

(57) **Abstract**

The present invention relates to a water-repellent film for an automobile side-view mirror and a press-forming apparatus of the same, and more specifically, to a water-repellent film for an automobile side-view mirror and a forming apparatus of the water-repellent film which has good water repellency and can come into close contact with the side-view mirror. The present invention provides a water-repellent film for an automobile side-view mirror, the water-repellent film including: a substrate layer provided to adhere to the side-view mirror; an adhesive layer that is formed under the substrate layer and has adhesion such that the substrate layer adheres to the side-view mirror; and a coating layer that is laminated on the substrate layer.

## Description

### [Technical Field]

The present invention relates to a water-repellent film for an automobile side-view mirror and a press-forming apparatus of the same, and more specifically, to a water-repellent film for an automobile side-view mirror and a press-forming apparatus of the water-repellent film which has good water repellency and can come into close contact with the side-view mirror.

### [Background Art]

In order for a driver to drive a vehicle safely, visibility has to be well secured.

However, a bad weather condition such as rainy weather results in low visibility in front and rear, and thus a vehicle is difficult to drive safely.

In particular, wipers are attached to windshield glass of a vehicle, and thus the wipers enable a field of view to be safely secured even in the rainy weather; however, a field of view in both sides of the vehicle is difficult to secure.

Specifically, when a raindrop or snow lands on a surface of side-view mirrors provided on both sides of the vehicle, a problem arises in that the raindrop or snow is difficult to remove.

In order to solve the problem, a method for attaching an additional tool or device to a side-view mirror and a method for enabling a side-view mirror itself to have a water-repellent function are used.

Of the methods, a technology for installing a wiper or the like on a side-view mirror has a problem in that a wiper-attached side-view mirror is difficult to manufacture because the wiper is installed on the side-view mirror and a spray outlet of a washer fluid or the like has to be formed. Accordingly, the wiper becomes a factor which degrades the external appearance of a vehicle, and thus the technology is not actually used.

In addition, in the related art, there is also used a technology for preventing a raindrop from landing on a surface of a side-view mirror by bonding a super water-repellent film sheet on the surface of the side-view mirror, which is disclosed in a 'method for manufacturing a super water-repellent film sheet' of Korean Patent Registration No. 10-1166152.

However, the super water-repellent film sheet is difficult to manufacture so as to come into close contact with a side-view mirror formed to have a curved surface, and thus a problem arises in that the super water-repellent film sheet is difficult to use.

In particular, a film is formed by a polymer material. Hence, when press-forming of the film is performed in accordance with a technology in the related art, a press-forming range is limited due to a springback phenomenon of the film, and a problem arises in that a thermal wrinkle is formed or press-forming damage occurs during press-forming of the film into a 3D shape.

Besides, in a press-forming method of the related art, when a hot press is used, problems arise in that thermal deformation or a thickness deviation after press-forming may be found, a film may also have distortion, and an additional cutting process needs to be performed on the film obtained after press-forming due to pinholes around the film to be used for preventing the film from being distorted and adjusting focus.

Hence, there is a demand for a water-repellent film for an automobile side-view mirror and a press-forming apparatus of the water-repellent film which has a super water-repellent function and can come into close contact with the automobile side-view mirror having a curved surface to be actually used.

### [Citation List]

### [Patent Literature]

[Patent Literature 1] Korean Patent Registration No. 10-1166152

### [Summary of Invention]

### [Technical Problem]

Objects of the present invention to solve the problems described above are to provide a water-repellent film for an automobile side-view mirror and a press-forming apparatus of the water-repellent film which has good water repellency and can come into close contact with the automobile side-view mirror.

Technical objects to be achieved by the present invention are not limited to the technical objects mentioned above, and the following description enables other unmentioned technical objects to be clearly understood by a person of ordinary skill in the art to which the present invention pertains.

### [Solution to Problem]

According to a configuration of the present invention to achieve the above-described object, there is provided a water-repellent film for an automobile side-view mirror, including: a substrate layer provided to adhere to the side-view mirror; an adhesive layer that is formed under the substrate layer and has adhesion such that the substrate layer adheres to the side-view mirror; and a coating layer that is laminated on the substrate layer.

In an embodiment of the present invention, the substrate layer may have a thickness of 8 µm to 500 µm.

In the embodiment of the present invention, the adhesive layer may have a thickness of 1 µm to 250 µm. In the embodiment of the present invention, the coating layer may be provided as a hard coating layer and has a thickness of 0.1 µm to 25 µm.

The embodiment of the present invention may further include a lining layer that is formed under the adhesive layer. The lining layer may have a thickness of 8 µm to 500 µm.

The embodiment of the present invention may further include a protective layer that is laminated on the coating layer. The protective layer may have a thickness of 8 µm to 500 µm.

According to another configuration of the present invention to achieve the above-described object, there is provided a press-forming apparatus of the water-repellent film for an automobile side-view mirror, the press-forming apparatus including: a die that press-forms the water-repellent film for an automobile side-view mirror; a press head unit that is positioned to correspond to the die and is separated from the die by a variable distance; and a volume variable body that is coupled to the press head unit and has elasticity such that a volume of the volume variable body varies due to inflow and outflow of a fluid by the press head unit. The volume variable body comes into close contact with the water-repellent film for an automobile side-view mirror which is positioned on the die depending on a volume change of the volume variable body and applies pressure to the water-repellent film for an automobile side-view mirror such that the water-repellent film for an automobile side-view mirror is press-formed into a 3D shape.

In another embodiment of the present invention, the volume variable body may be configured to apply pressure to the die and a curved part of the water-repellent film for an automobile side-view mirror and press-form the water-repellent film three-dimensionally by being partially expanded with inflow of a part of fluid before coming into contact with the water-repellent film for an automobile side-view mirror, then, by coming into contact with the water-repellent film for an automobile side-view mirror, and by being expanded with inflow of a remaining fluid after the contact with the water-repellent film for an automobile side-view mirror.

According to still another configuration of the present invention to achieve the above-described object, there is provided a method for manufacturing a die of the press-forming apparatus of the water-repellent film for an automobile side-view mirror, the method including: i) a step of preparing the water-repellent film for an automobile side-view mirror and preparing a testing die which is a die for a press-forming test of the water-repellent film for an automobile side-view mirror; ii) a step of measuring a springback deformation amount of the water-repellent film for an automobile side-view mirror by press-forming the water-repellent film for an automobile side-view mirror by using the testing die; iii) a step of deriving a prediction amount of springback deformation of the water-repellent film for an automobile side-view mirror by performing press-forming analysis on the water-repellent film for an automobile side-view mirror and the testing die; iv) a step of deriving inversely estimated physical property value by inversely estimating a physical property value which is inputted for press-forming analysis of the water-repellent film for an automobile side-view mirror by adjusting a physical property value inputted for the press-forming analysis of the water-repellent film for an automobile side-view mirror such that the derived prediction amount of springback deformation equals to a springback deformation amount of the water-repellent film for an automobile side-view mirror which is press-formed using the testing die; and v) a step of forming a manufacturing die which is a die having a shape obtained by correcting the testing die by reflecting the derived inversely estimated physical property value.

In still another embodiment of the present invention, in the step of ii), a springback deformation amount of the water-repellent film for an automobile side-view mirror may be measured by extracting a three-dimensional shape of the press-formed water-repellent film for an automobile side-view mirror by using non-contact optical measurement or a contact probe.

### [Advantageous Effects of Invention]

Effects of the present invention according to the above-described configurations are as follows. A water-repellent film for an automobile side-view mirror of which water repellency is improved enables a liquid landing on the side-view mirror to be rapidly removed.

In addition, use of a die manufactured by offsetting a springback value based on curvature of the automobile side-view mirror enables the water-repellent film for an automobile side-view mirror to be easily press-formed, the water-repellent film being suitable for 3D shapes having various curved shapes.

In addition, the present invention has another effect of enabling a curved surface to be press-formed by performing press-forming at uniform pressure using a volume variable body.

In addition, the present invention has still another effect of preventing a thermal wrinkle from being formed at a curved surface part or the like of the water-repellent film for an automobile side-view mirror.

In addition, still other effects of the present invention are as follows. A thickness deviation of the water-repellent film for an automobile side-view mirror can be decreased to improve a quality of the water-repellent film for an automobile side-view mirror after press-forming.

In addition, the water-repellent film for an automobile side-view mirror can be prevented from being distorted, an additional cutting process after press-forming can be removed, and pinholes formed in the film to fix the film can be removed such that a defect rate can be decreased and productivity can be improved.

Besides, when the press-forming is performed by the volume variable body, an appropriate temperature, pressure, time, or the like can be adjusted, and thus a whitening phenomenon due to extension of the water-repellent film for an automobile side-view mirror can be prevented when the water-repellent film for an automobile side-view mirror is press-formed.

In addition, the water-repellent film for an automobile side-view mirror can be press-formed without a procedure such as a process of exposing the water-repellent film to a high-temperature environment for a long time. Hence, a process time is shortened, and manufacturing efficiency of the water-repellent film for an automobile side-view mirror can be improved.

In addition, the present invention has still another effect of enabling accuracy of springback analysis to be more improved compared to conventional springback analysis.

Besides, the present invention has still another effect of shortening a time taken to manufacture a die, in that the water-repellent film for an automobile side-view mirror of which a springback phenomenon is offset can be press-formed without performing separate die correcting work in a case of manufacturing a die.

The effects of the present invention are construed not to be limited to the above-described effects but to include every effect that can be derived from the configurations of the present invention described in Description of Embodiments or Claims of the present invention.

### [Brief Description of Drawings]

FIG. 1 is a view illustrating a water-repellent film for an automobile side-view mirror according to an embodiment of the present invention.
FIG. 2 illustrates a front view of a press-forming apparatus according to the embodiment of the present invention.
FIG. 3 illustrates a plan view of the press-forming apparatus according to the embodiment of the present invention.
FIG. 4 illustrates a right side view of the press-forming apparatus according to the embodiment of the present invention.
FIG. 5 illustrates a front view of a press head unit according to the embodiment of the present invention.
FIG.6 illustrates a front view and a right side view of the press head unit according to the embodiment of the present invention.
FIG.7 illustrates a plan view and a front view of a clamp unit according to the embodiment of the present invention.
FIG. 8 illustrates a right side view of a pick-up unit according to the embodiment of the present invention.
FIG. 9 illustrates a plan view and a front view of the pick-up unit according to the embodiment of the present invention.
FIG.10 illustrates a front view and a right side view of a film aligning unit according to the embodiment of the present invention.
FIG. 11 illustrates a plan view of the film aligning unit according to the embodiment of the present invention.
FIG.12 illustrates a front view and a right side view of a pick-up cooling unit according to the embodiment of the present invention.
FIG. 13 illustrates a plan view of the pick-up cooling unit according to the embodiment of the present invention.
FIG. 14 illustrates a front view of a first collecting unit according to the embodiment of the present invention.
FIG.15 illustrates a plan view and a right side view of the first collecting unit according to the embodiment of the present invention.
FIG. 16 illustrates a front view of a second collecting unit according to the embodiment of the present invention.
FIG.17 illustrates a plan view and a right side view of the second collecting unit according to the embodiment of the present invention.
FIG. 18 is a schematic view illustrating springback deformation of the water-repellent film for an automobile side-view mirror according to the embodiment of the present invention.
FIG. 19 is a flowchart of a method for manufacturing a die according to another embodiment of the present invention.

### [Preferred Embodiments for Carrying out the Invention]

A preferred embodiment of the present invention provides a water-repellent film for an automobile side-view mirror including: a substrate layer provided to adhere to the side-view mirror; an adhesive layer that is formed under the substrate layer and has adhesion such that the substrate layer adheres to the side-view mirror; and a coating layer that is laminated on the substrate layer.

### [Description of Embodiments]

Hereinafter, the present invention will be described with reference to the accompanying drawings. However, the present invention can be realized as various different examples, thus not being limited to the embodiments described here. Besides, a part unrelated to the description is omitted from the drawings in order to clearly describe the present invention, and similar reference signs are assigned to similar parts through the entire specification.

In the entire specification, a case where a certain part "is connected to (accesses, is in contact with, or is coupled to)" another part includes not only a case where the parts are "directly connected" to each other, but also a case where the parts are "indirectly connected" to each other with another member interposed therebetween. In addition, a case where a certain part "comprises" a certain configurational element means that another configurational element is not excluded but can be further included, unless specifically described otherwise.

Terms used in this specification are only used to describe a specific embodiment and are not intentionally used to limit the present invention thereto. A word having a singular form also includes a meaning of its plural form, unless obviously implied otherwise in context. In this specification, words such as "to comprise" or "to include" are construed to specify that a feature, a number, a step, an operation, a configurational element, a member, or a combination thereof described in the specification is present and not to exclude presence or a possibility of addition of one or more additional features, numbers, steps, operations, configurational elements, members, or combinations thereof in advance.

Hereinafter, embodiments of the present invention will be described in detail with reference to the accompanying drawings.

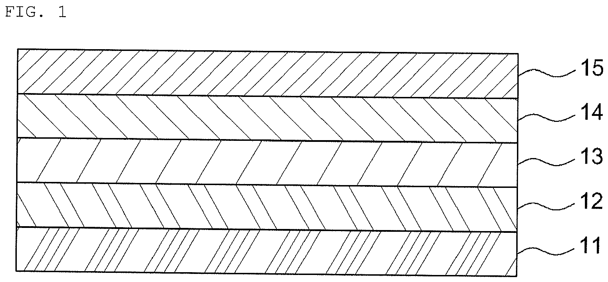

FIG. 1 is a view illustrating a water-repellent film for an automobile side-view mirror according to an embodiment of the present invention.

As illustrated in FIG. 1, a water-repellent film 10 for an automobile side-view mirror according to the embodiment can include a lining layer 11, an adhesive layer 12, a substrate layer 13, a coating layer 14, and a protective layer 15.

The lining layer 11 can be formed at the lowest layer of the water-repellent film 10 for an automobile side-view mirror. Specifically, the lining layer 11 is formed under the adhesive layer 12 and can be removed when the substrate layer 13 is to adhere to the automobile side-view mirror. Besides, the lining layer 11 can have a thickness of 8 µm to 500 µm.

In addition, a release coating layer can be formed on the lining layer 11, and the release coating layer can be provided to have a thickness of 0.1 µm to 2.0 µm.

The adhesive layer 12 is provided under the substrate layer 13 and on the lining layer 11, and the adhesive layer 12 can have adhesion such that the substrate layer 13 adheres to the side-view mirror. Besides, the adhesive layer 12 can have a thickness of 1 µm to 250 µm. The adhesive layer 12 can be a silicone-based adhesive layer or can be formed as an acrylic-based adhesive layer; however, the adhesive layer is not limited thereto.

The substrate layer 13 can be provided to come into close contact with the side-view mirror and adhere thereto and can adhere to the side-view mirror by the adhesive layer 12 that forms a lower layer of the substrate layer. The substrate layer 13 has a thickness of 8 µm to 500 µm.

The coating layer 14 can be provided to be laminated on the substrate layer 13 and can be formed as a hard coating layer. As an example, the coating layer 14 can be formed as a UV hard coating layer. Besides, the coating layer 14 can be provided to have a thickness of 0.1 µm to 25 µm.

The protective layer 15 can be provided to be laminated on the coating layer 14 and can be provided to have a thickness of 8 µm to 500 µm.

In addition, a bonding layer having adhesiveness can be further formed under the protective layer 15. The bonding layer can be a silicone-based adhesive layer or can be formed as an acrylic-based adhesive layer; however, the bonding layer is not limited thereto. The bonding layer can be provided to have a thickness of 1 µm to 25 µm.

The water-repellent film 10 for an automobile side-view mirror can be formed to have a total thickness of 126.2 µm to 1,802.0 µm. However, the thickness of the water-repellent film 10 for an automobile side-view mirror is not limited thereto.

In addition, in general, the automobile side-view mirror has a convex mirror shape, and there is also a flat side-view mirror for an automobile. Hence, the water-repellent film 10 for an automobile side-view mirror according to the present invention can be formed into a shape having a flat surface or a predetermined curvature radius.

The water-repellent film 10 for an automobile side-view mirror which is formed to have such a structure described above has good water repellency so as to enable a liquid such as a raindrop landing on the side-view mirror to swiftly flow and be removed.

Besides, the water-repellent film 10 for an automobile side-view mirror can be formed into a shape corresponding to a curved surface of the side-view mirror and can be formed to come into close contact with the side-view mirror.

Hereinafter, with reference to the following drawings, a press-forming apparatus for press-forming the water-repellent film 10 for an automobile side-view mirror into the shape corresponding to a curved surface shape of the side-view mirror will be described.

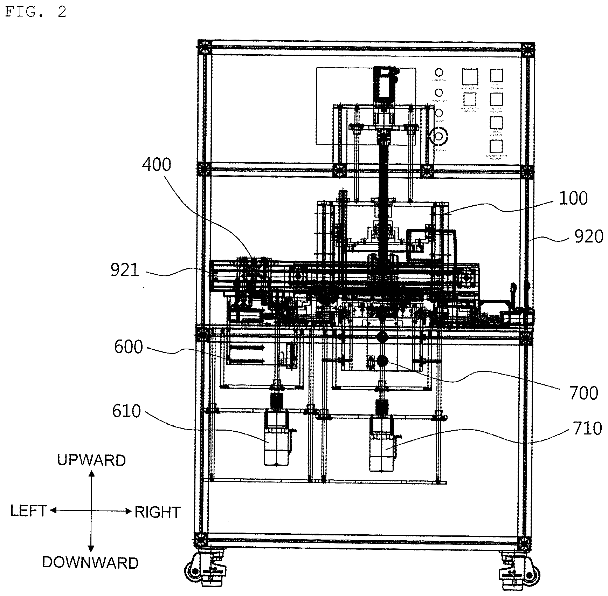

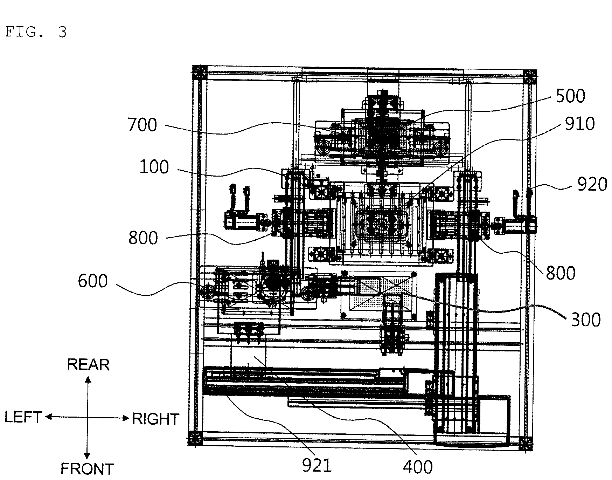

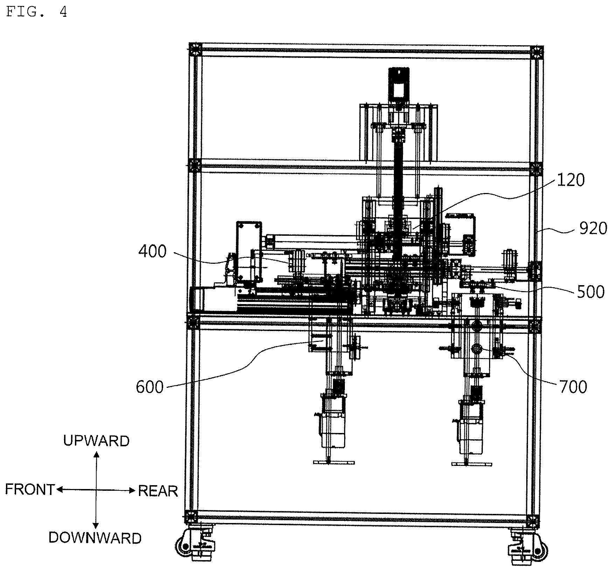

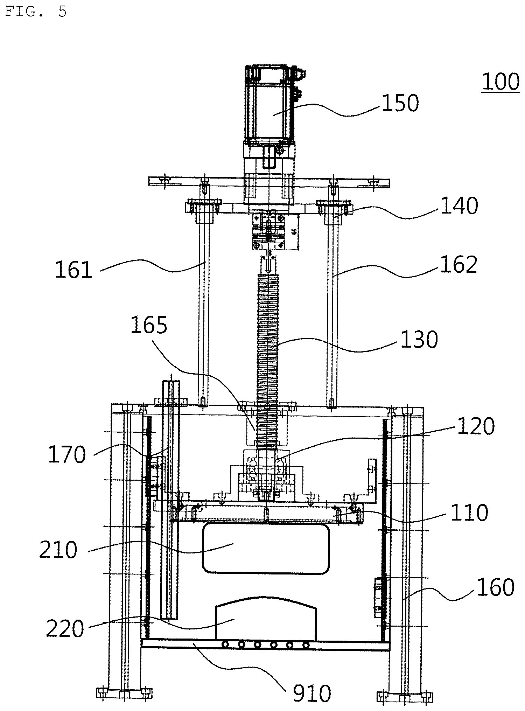

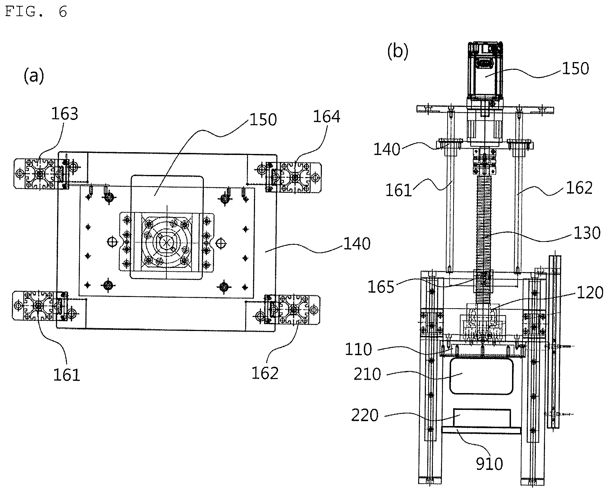

FIG. 2 illustrates a front view of the press-forming apparatus according to the embodiment of the present invention. FIG. 3 illustrates a plan view of the press-forming apparatus according to the embodiment of the present invention. FIG. 4 illustrates a right side view of the press-forming apparatus according to the embodiment of the present invention. FIG. 5 illustrates a front view of a press head unit 100 according to the embodiment of the present invention. FIG.6 illustrates a front view and a right side view of the press head unit 100 according to the embodiment of the present invention. Here, (a) of FIG.6 illustrates a front view of the press head unit 100, and (b) of FIG.6 illustrates a right side view of the press head unit 100.

As illustrated in FIGS. 2 to 6, the press-forming apparatus of the present invention includes a die 220 that press-forms the water-repellent film 10 for an automobile side-view mirror, the press head unit 100 that is positioned to correspond to the die 220 and is separated from the die 220 by a variable distance, and a volume variable body 210 that is coupled to the press head unit 100 and has elasticity such that a volume of the volume variable body varies due to inflow and outflow of a fluid by the press head unit 100. Besides, the volume variable body 210 can come into contact with the water-repellent film 10 for an automobile side-view mirror which is positioned on the die 220 depending on a volume change of the volume variable body 210 and can apply pressure to the water-repellent film 10 for an automobile side-view mirror such that the water-repellent film 10 for an automobile side-view mirror can be press-formed into a 3D shape.

In other words, a flat film having a flat-plate shape is often used as a general film in the related art, and a press apparatus for processing the flat film press-forms the film by applying pressure in one direction.

In a case of using the above-described press apparatus in the related art, a pressuring surface of the press apparatus is configured to move in a straight direction of up and down or right and left, and thus it is not possible for the pressuring surface to pressure a curved surface. Therefore, a problem arises in that it is not possible to press-form a film having a 3D, and particularly, it is not possible to press-form the water-repellent film 10 for an automobile side-view mirror to have uniform curvature, the water-repellent film being formed to come into close contact with the side-view mirror formed to have a curved surface.

However, the press-forming apparatus of the water-repellent film 10 for an automobile side-view mirror of the present invention additionally includes the separate volume variable body 210 at an end of the press head unit 100 which comes into abutting contact with the die 220. The volume variable body 210 can control a fluid to flow in and out, and thereby the press-forming apparatus can not only manufacture the flat film by pressuring a flat top of the die 220, similarly to the press apparatus in the related art, but also can perform a pressing process on the curved water-repellent film 10 for an automobile side-view mirror by causing the volume variable body 210 to pressure the outside of the die having a curved shape.

A die having individually different curvature depending on curved surfaces of the various side-view mirrors can be designed, and the volume variable body 210 can apply pressure to the die while being expanded, regardless of the curvature of the die. Hence, the press-forming apparatus of the water-repellent film 10 for an automobile side-view mirror has an advantage of being widely used, regardless of a target product or a die.

A detailed configuration for manufacturing the water-repellent film 10 for an automobile side-view mirror by expansion and pressuring of the volume variable body 210 is described as follows. The configuration further includes a height adjusting unit that is connected to one side of the die 220 or the press head unit 100 and adjusts a vertical position of the die 220 or the press head unit 100, and the press-forming of the water-repellent film 10 for an automobile side-view mirror can be easily adjusted by an operation of the height adjusting unit.

In other words, the height adjusting unit can adjust a vertical position of one of the die 220 and the press head unit 100 to apply pressure to the water-repellent film 10 for an automobile side-view mirror or can simultaneously adjust positions of both the die 220 and the press head unit 100 to apply pressure to the water-repellent film 10 for an automobile side-view mirror, and the height adjusting unit does not need to be limited to one way thereof.

Besides, the press head unit 100 can include a fluid controller 120 that causes a fluid received from outside to flow into the volume variable body 210 or causes a fluid in the volume variable body 210 to flow out. Here, the press head unit 100 can further include a press frame 160, a vertically moving body 140 which is coupled to the press frame 160 and performs an vertical linear movement, a press motor 150 which is coupled to the vertically moving body 140, a screw shaft 130 of which one end is coupled to the press motor 150 and the other end is coupled to an upper portion of the fluid controller 120 and which is screw-coupled to the press frame 160 and performs a rotation movement and a vertical linear movement, and a press head 110 of which an upper portion is coupled to the fluid controller 120 and a lower portion is coupled to the volume variable body 210.

Hence, preferably, the volume variable body 210 is configured to apply pressure to the die and the water-repellent film 10 for an automobile side-view mirror and three-dimensionally press-form the water-repellent film by being partially expanded with inflow of a part of fluid before coming into contact with the water-repellent film 10 for an automobile side-view mirror, then, by coming into contact with the water-repellent film 10 for an automobile side-view mirror, and by being expanded with inflow of a remaining fluid after the contact with the water-repellent film 10 for an automobile side-view mirror.

The press-forming apparatus of the present invention can include an apparatus frame 920 that forms an outermost shape of the press-forming apparatus of the present invention. The press frame 160 can be coupled to the apparatus frame 920 to be positioned at an upper side from a center of the apparatus frame 920. The press frame 160 can have a first guide shaft 161, a second guide shaft 162, a third guide shaft 163, a fourth guide shaft 164 which are coupled to the vertically moving body 140 that moves in a vertical direction and guide the vertically moving body 140. Here, the first to fourth guide shafts 161 to 164 can have a bar shape; however, the shape of the guide shafts is not limited thereto.

The fluid controller 120 is connected to a pump which is formed outside the press-forming apparatus of the present invention, and the pump can pressure and supply a fluid to the fluid controller 120 or can provide a fluid suction force to the fluid controller 120. Here, the fluid can be a gas such as air or can be a liquid. Besides, the fluid controller 120 can have a fluid control valve. When the pump pressures and supplies the fluid to the fluid controller 120, the fluid control valve is open so as to allow the fluid to flow into the volume variable body 210, and thereby a volume of the volume variable body 210 can be increased. Here, when the volume variable body 210 is changed into a preset volume, the fluid control valve is closed, and thereby a shape of the volume-increased volume variable body 210 can be maintained. Besides, when the pump provides the fluid suction force to the fluid controller 120, the fluid control valve is open so as to allow the fluid to flow out to the pump, and thereby the volume of the volume variable body 210 can be decreased.

The press head unit 100 can further have a screw guide body 165 which is coupled to the press frame 160 to be fixed thereto and has a female thread formed at an inner surface thereof. Here, the screw shaft 130 can have a male thread formed at an outer surface thereof, and the screw shaft 130 can be coupled to the screw guide body 165. Besides, the screw shaft 130 performs a vertical linear movement along with a rotation direction of the screw shaft 130 coupled to the press motor 150. Accordingly, the press motor 150 performs the vertical linear movement, and thereby the vertically moving body 140 coupled to the press motor 150 can perform a vertical linear movement. In addition, the fluid controller 120 and the press head 110 can perform a vertical linear movement along with the vertical linear movement of the screw shaft 130.

The press head unit 100 can have a press-head guide shaft 170 which is coupled to the press head 110 and guides the vertical linear movement of the press head 110. Accordingly, even when the screw shaft 130 rotates, the press head 110 and the fluid controller 120 do not rotate, but the press head 110 can perform the vertical linear movement along the press-head guide shaft 170. Here, the other end of the screw shaft 130 which is coupled to the fluid controller 120 has a curved outer surface at which a male thread is not formed, and the other end of the screw shaft 130 can freely rotate with respect to the fluid controller 120.

The die 220 can be formed into a shape corresponding to a press-forming shape of the water-repellent film 10 for an automobile side-view mirror and can be made of metal. The die 220 can be provided to be coupled to the press frame 160 and can be positioned to be separated from the press head 110 in a downward direction of the press head 110.

The volume variable body 210 can be made of a material having elasticity and, specifically, can be made of a natural rubber or polymer material. In the embodiment of the present invention, the volume variable body 210 is described to be made of the above-described material; however, the material is not necessarily limited thereto, and the volume variable body can be made of another material having the elasticity. When the volume of the volume variable body 210 is increased, the volume variable body can have a rectangular parallelepiped shape having rounded edges. Accordingly, it is possible to perform a process in which an undersurface of the volume-increased volume variable body 210 comes into contact with the water-repellent film 10 for an automobile side-view mirror, and lowering of the press head 110 causes the volume variable body 210 to pressure the water-repellent film 10 for an automobile side-view mirror on the die 220.

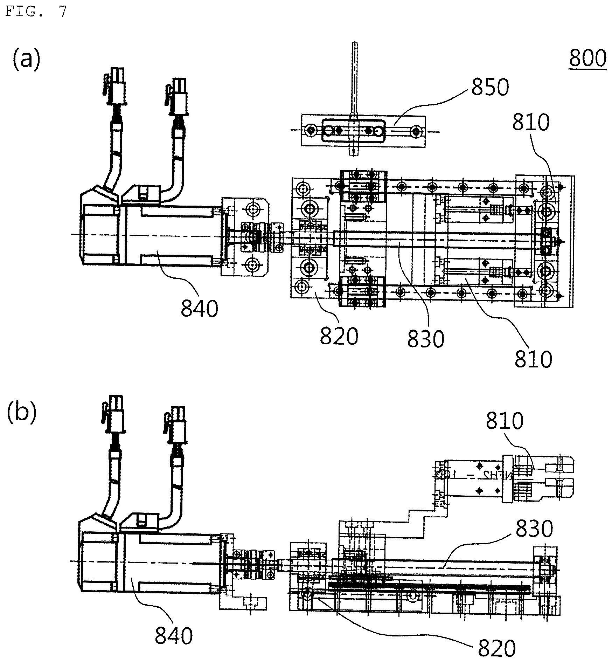

FIG.7 illustrates a plan view and a front view of a clamp unit 800 according to the embodiment of the present invention. Here, (a) of FIG.7 illustrates the plan view of the clamp unit 800, and (b) of FIG.7 illustrates the front view of the clamp unit 800. As illustrated in FIG. 7, the press-forming apparatus of the present invention can further include the clamp unit 800 that is provided to be adjacent to the die 220 and fixes and supports the waLer-repellent film 10 for an automobile side-view mirror when the water-repellent film 10 for an automobile side-view mirror is positioned on the die 220. The clamp unit 800 can include a tongs-shaped clamp 810 which grips and fixes the water-repellent film 10 for an automobile side-view mirror when the water-repellent film 10 for an automobile side-view mirror is positioned on the die 220, a clamp support 820 which is coupled to the clamp 810 and supports the clamp 810, a clamp screw shaft 830 which is coupled to the clamp support 820 and has a male thread formed at an outer surface so as to be screw-coupled to the clamp support 820 having the female thread, and a clamp motor 840 that is coupled to the clamp screw shaft 830 and performs a rotating movement so as to cause the clamp support 820 to perform a horizontal linear movement. The clamp motor 840 can be coupled to the apparatus frame 920 to be fixed and supported thereto. Here, the clamp 810 can release the water-repellent film 10 for an automobile side-view mirror, when the volume variable body 210 is lowered and is in contact with the water-repellent film 10 for an automobile side-view mirror on the die 220 such that the volume variable body 210 and the die 220 start fixing the water-repellent film 10 for an automobile side-view mirror. Besides, the clamp unit 800 can have a clamp sensor 850, and the clamp sensor 850 can detect a position of the clamp 810. Accordingly, the position of the clamp 810 can be changed depending on the position of the volume variable body 210. At least one clamp unit 800 can be formed.

The water-repellent film 10 for an automobile side-view mirror can be formed by punching a raw-material film from the outside of the press-forming apparatus of the present invention.

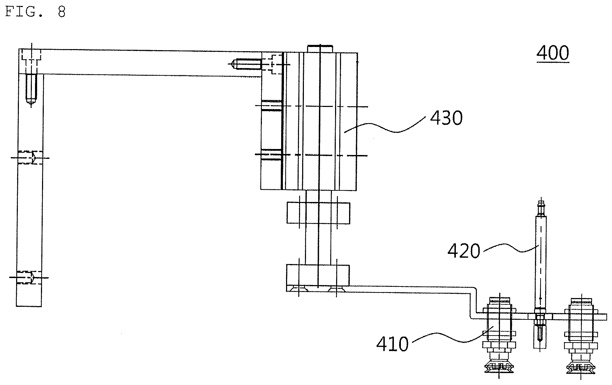

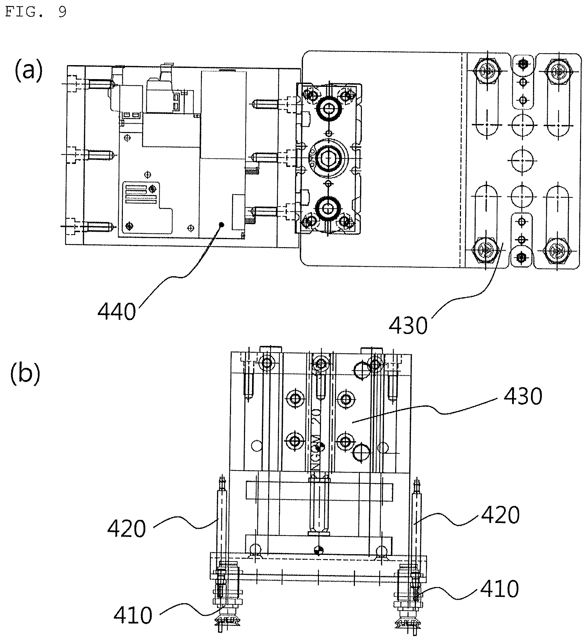

FIG. 8 illustrates a right side view of a pick-up unit 400 according to the embodiment of the present invention. FIG. 9 illustrates a plan view and a front view of the pick-up unit 400 according to the embodiment of the present invention. Here, (a) of FIG. 9 illustrates the plan view of the pick-up unit 400, and (b) of FIG. 9 illustrates the front view of the pick-up unit 400.

As illustrated in FIGS. 8 and 9, the press-forming apparatus of the present invention can further include the pick-up unit 400 that transfers the water-repellent film 10 for an automobile side-view mirror to a film aligning unit 300. The pick-up unit 400 can perform a horizontal linear movement along a pick-up unit guide 921 formed at the apparatus frame 920. The pick-up unit 400 can include a first pick-up machine 410 which provides a suction force to the water-repellent film 10 for an automobile side-view mirror and picks up the water-repellent film 10 for an automobile side-view mirror, an attaching/detaching cylinder 420 which is coupled to the first pick-up machine 410, has a variable length, and detaches the water-repellent film 10 for an automobile side-view mirror which has been suctioned and picked up by the first pick-up machine 410 when a length of the attaching/detaching cylinder is increased, a first pick-up machine transferring cylinder 430 which is coupled to the first pick-up machine 410 and has a variable length so as to cause the first pick-up machine 410 to perform a vertical linear movement, and an ejector 440 which is coupled to the first pick-up machine transferring cylinder 430 and provides a suction force to the first pick-up machine 410. According to such a configuration described above, the first pick-up machine 410 can perform vertical and horizontal linear movements to easily transfer the water-repellent film 10 for an automobile side-view mirror collected at a first collecting unit 600 to a suction bed 310 of the film aligning unit 300. Besides, the first pick-up machine 410 can suction and pick up the water-repellent film 10 for an automobile side-view mirror from the suction bed 310 and can transfer the water-repellent film to the die 220.

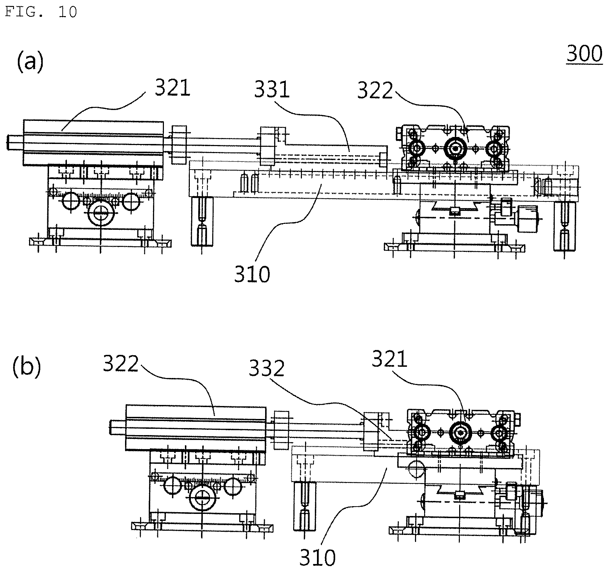

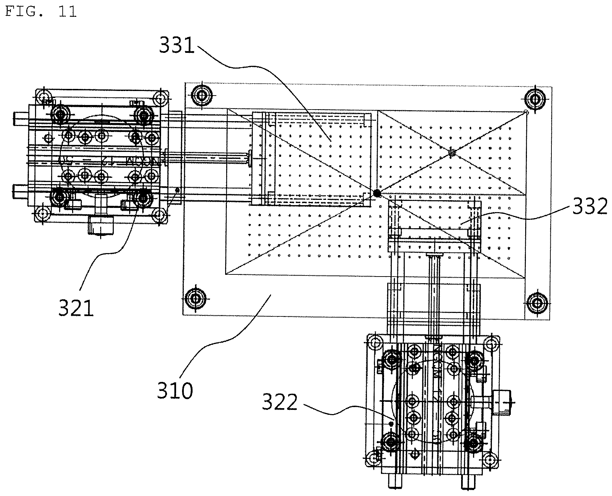

FIG.10 illustrates a front view and a right side view of the film aligning unit 300 according to the embodiment of the present invention. FIG. 11 illustrates a plan view of the film aligning unit 300 according to the embodiment of the present invention. Here, (a) of FIG.10 illustrates the front view of the film aligning unit 300, and (b) of FIG.10 illustrates the right side view of the film aligning unit 300.

As illustrated in FIGS. 10 and 11, the press-forming apparatus of the present invention can further include the film aligning unit 300 that has the suction bed 310 which fixes the water-repellent film 10 for an automobile side-view mirror by using a suction force and that aligns the water-repellent film 10 for an automobile side-view mirror. The film aligning unit 300 can include the suction bed 310 which provides the suction force to the water-repellent film 10 for an automobile side-view mirror and supports the water-repellent film 10 for an automobile side-view mirror, a first aligning cylinder 321 and a second aligning cylinder 322 which have a variable length, a first film aligning body 331 which is coupled to the first aligning cylinder 321, performs a horizontal linear movement due to the variable length of the first aligning cylinder 321, and surface-pressures one side of the water-repellent film 10 for an automobile side-view mirror to align the water-repellent film 10 for an automobile side-view mirror, and a second film aligning body 332 which is coupled to the second aligning cylinder 322, performs a horizontal linear movement due to the variable length of the second aligning cylinder 322, and surface-pressures another side of the water-repellent film 10 for an automobile side-view mirror to align the water-repellent film 10 for an automobile side-view mirror. Here, the central shaft of the first aligning shaft 321 can be formed to be perpendicular to the central shaft of the second aligning shaft 322, and a side support that supports still another side of the water-repellent film 10 for an automobile side-view mirror which is not brought into contact with the first film aligning body 331 and the second film aligning body 332 can be formed.

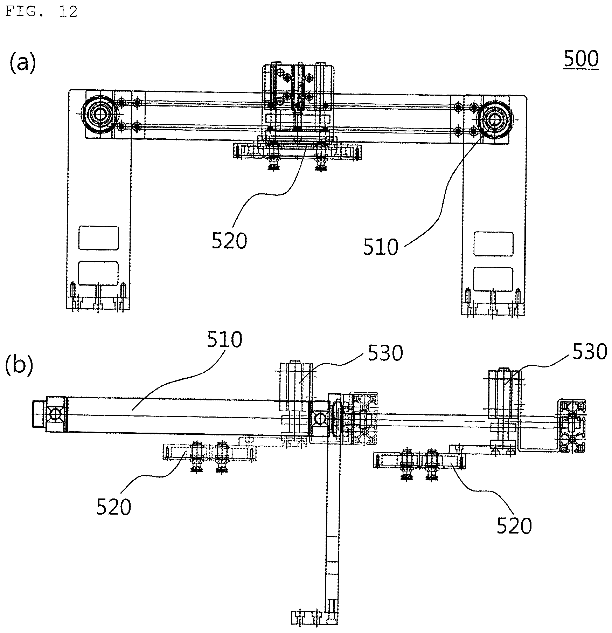

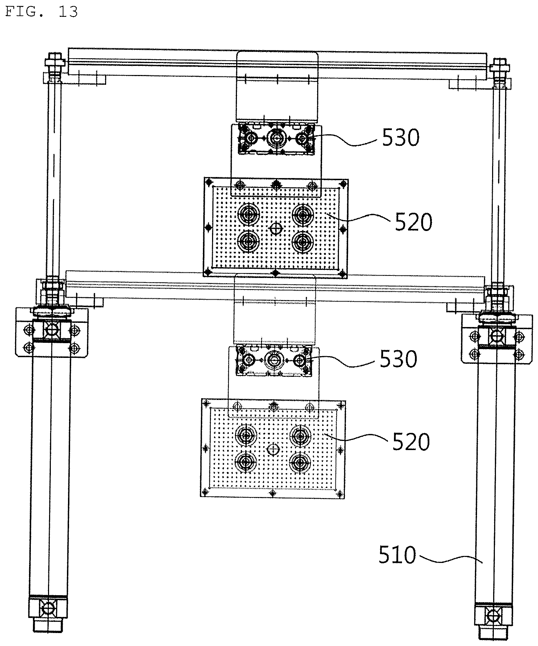

FIG.12 illustrates a front view and a right side view of a pick-up cooling unit 500 according to the embodiment of the present invention. FIG. 13 illustrates a plan view of the pick-up cooling unit 500 according to the embodiment of the present invention. (a) of FIG.12 illustrates the front view of the pick-up cooling unit 500, and (b) of FIG.12 illustrates the right side view of the pick-up cooling unit 500. Here, (b) of FIG. 12 and FIG. 13 can illustrate a linear reciprocating movement of the second pick-up machine 520 in a front-rear direction along with an operation of a front-rear transferring cylinder 510. The press-forming apparatus of the present invention can further include the pick-up cooling unit 500 that moves the press-formed water-repellent film 10 for an automobile side-view mirror and cools the water-repellent film 10 for an automobile side-view mirror press-formed at the die 220. The pick-up cooling unit 500 can have the front-rear transferring cylinder 510 which is coupled to the apparatus frame 920 and has a variable length, and the second pick-up machine 520 which is coupled to the front-rear transferring cylinder 510 and performs a front-rear linear movement due to the variable length of the front-rear transferring cylinder 510 so as to transfer the press-formed water-repellent film 10 for an automobile side-view mirror press-formed into a 3D shape by the die 220 to a second collecting unit 700. Besides, the second pick-up machine 520 can cool the 3D water-repellent film 10 for an automobile side-view mirror which has been press-formed by the die 220.

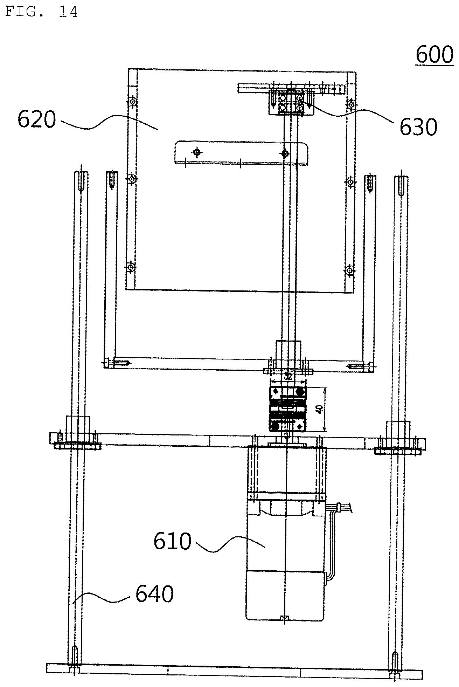

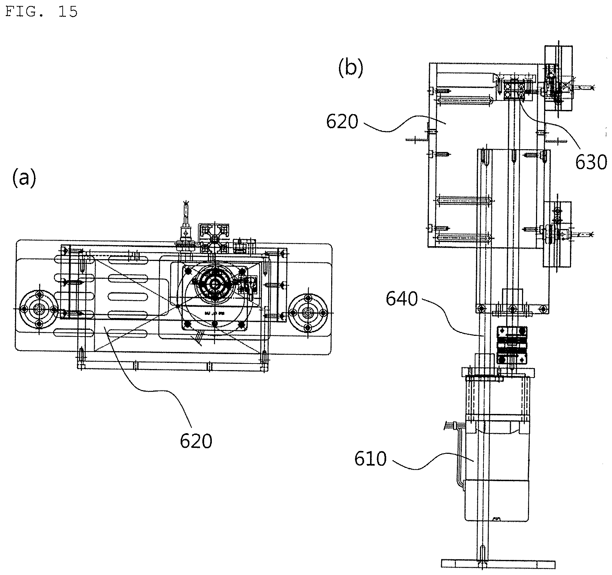

FIG. 14 illustrates a front view of the first collecting unit 600 according to the embodiment of the present invention. FIG.15 illustrates a plan view and a right side view of the first collecting unit 600 according to the embodiment of the present invention. (a) of FIG.15 illustrates the plan view of the first collecting unit 600, and (b) of FIG.15 illustrates the right side view of the first collecting unit 600.

As illustrated in FIGS. 14 and 15, the press-forming apparatus of the present invention can further include the first collecting unit 600 to which the punched water-repellent film 10 for an automobile side-view mirror is moved and collected. Besides, the first collecting unit 600 can include a first collecting frame 640, a first collecting motor 610 which is coupled to the first collecting frame 640, a first collecting body 620 which is coupled to the first collecting motor 610 and performs a vertical linear movement by driving of the first collecting motor 610 and at which the punched water-repellent film 10 for an automobile side-view mirror is loaded, and a first collection sensor 630 which determines whether or not the water-repellent film 10 for an automobile side-view mirror is loaded at the first collecting body 620. Here, when the first collection sensor 630 detects that the punched water-repellent film 10 for an automobile side-view mirror is loaded at the first collecting body 620, the first pick-up machine 410 moves to the first collecting body 620, suctions and picks up the water-repellent film 10 for an automobile side-view mirror, and then transfers the water-repellent film to the suction bed 310 such that the water-repellent film 10 for an automobile side-view mirror can be suctioned by the suction bed 310.

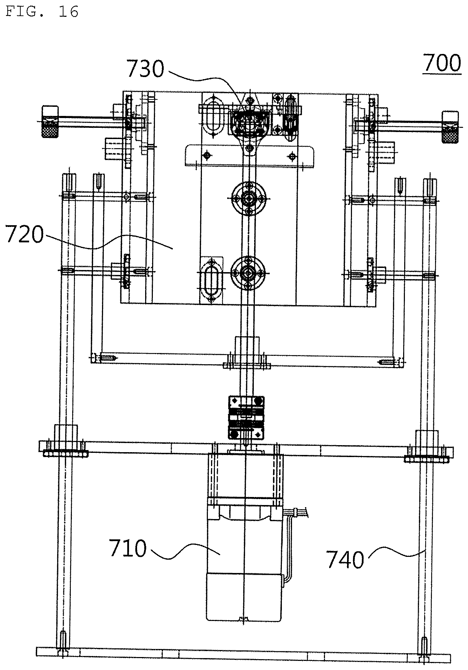

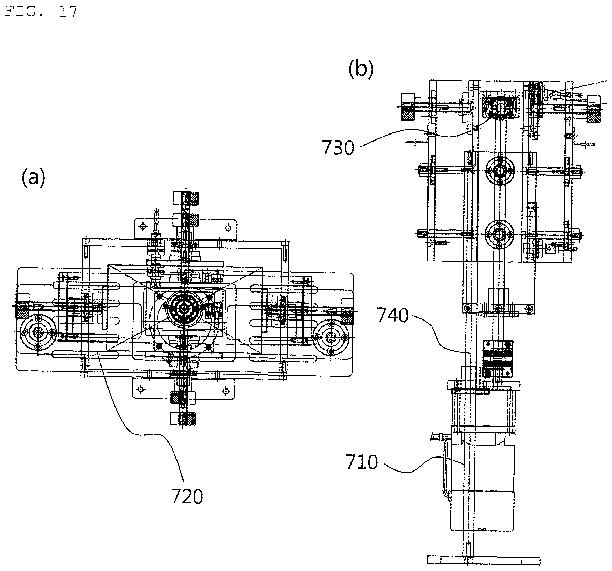

FIG. 16 illustrates a front view of a collecting unit according to the embodiment of the present invention. FIG.17 illustrates a plan view and a right side view of the collecting unit according to the embodiment of the present invention.

As illustrated in FIGS. 16 and 17, the press-forming apparatus of the present invention can further include the second collecting unit 700 to which the press-formed water-repellent film 10 for an automobile side-view mirror is moved and collected. Besides, the second collecting unit 700 can include a second collecting frame 740, a second collecting motor 710 which is coupled to the second collecting frame 740, a second collecting body 720 which is coupled to the second collecting motor 710 and performs a vertical linear movement by driving of the second collecting motor 710 and at which the press-formed water-repellent film 10 for an automobile side-view mirror is loaded, and a second collection sensor 730 which determines whether or not the press-formed water-repellent film 10 for an automobile side-view mirror is loaded at the second collecting body 720. Here, when the second collection sensor 730 detects that the press-formed water-repellent film 10 for an automobile side-view mirror is loaded at the second collecting body 720, an alarm unit can issue a visible or audible alarm sign indicating completion of the water-repellent film 10 for an automobile side-view mirror.

As described above, the individual cylinders and motors can cause the individual configurational elements coupled to the cylinders and motors to perform a linear movement in a vertical, horizontal, or front-rear direction, and thus the water-repellent film 10 for an automobile side-view mirror can be transferred in the respective three-dimensional directions.

The press-forming apparatus of the present invention can further include a heating unit 910 that is positioned below the die 220 and heats the die 220. The heating unit 910 can be coupled to a lower portion of the press frame 160 and can heat the die 220 from below the die 220. The heating unit 910 can be formed by a plurality of heat wires, and the plurality of heat wires can be energized to generate heat energy.

Hereinafter, a method for press-forming the water-repellent film 10 for an automobile side-view mirror by using the press-forming apparatus of the present invention will be described.

In a first step, 3D shape data of a manufacturing target can be prepared, and the 3D shape data can be converted into 2D data.

In a second step, the first pick-up machine 410 can transfer the water-repellent film 10 for an automobile side-view mirror which has been formed by punching a raw-material film based on the 2D data from the first collecting unit 600 to the suction bed 310.

In a third step, the water-repellent film 10 for an automobile side-view mirror on the suction bed can be aligned at the film aligning unit.

In a fourth step, the first pick-up machine 410 can transfer the water-repellent film 10 for an automobile side-view mirror to the die 220.

In a fifth step, the volume of the volume variable body 210 is increased, and the press head 110 is lowered such that the volume variable body 210 pressures the water-repellent film 10 for an automobile side-view mirror on the die 220 heated by the heating unit 910, and thereby the water-repellent film 10 for an automobile side-view mirror corresponding to the shape of the side-view mirror can be press-formed.

In a sixth step, as the volume of the volume variable body 210 is decreased, the press head 110 is lifted, and the second pick-up machine 520 is moved to the die 220 such that the press-formed water-repellent film 10 for an automobile side-view mirror can be cooled.

In a seventh step, the second pick-up machine 520 can move the press-formed water-repellent film 10 for an automobile side-view mirror from the die 220 to the second collecting unit 700.

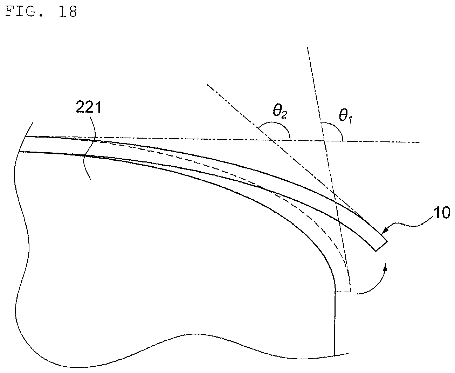

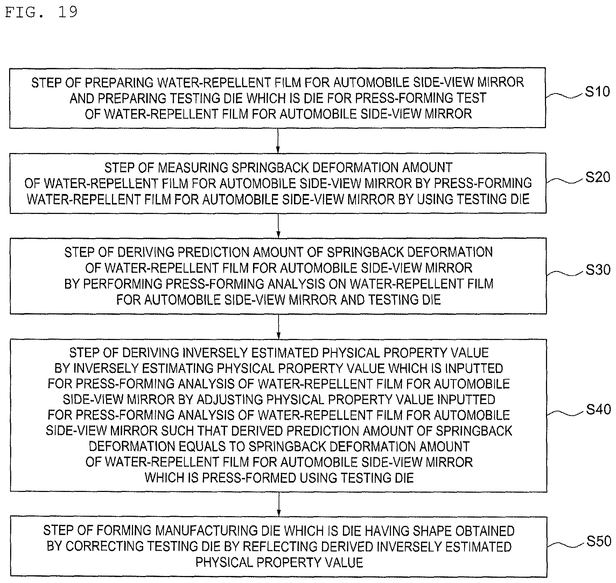

FIG. 18 is a schematic view illustrating springback deformation of the water-repellent film 10 for an automobile side-view mirror according to the embodiment of the present invention. FIG. 19 is a flowchart of a method for manufacturing a die according to another embodiment of the present invention.

The method for manufacturing the die 220 of the present invention is to be described with reference to FIGS. 18 and 19. In the description of the embodiments of the present invention, a physical property value can be a mechanical property value. Hereinafter, the same is true of the following.

In the first step S10, the water-repellent film 10 for an automobile side-view mirror which is a film formed by laminating a plurality of layers can be prepared, and a testing die which is the die 220 for a press-forming test of the water-repellent film 10 for an automobile side-view mirror can be prepared.

One layer of the plurality of layers forming the layers of the water-repellent film 10 for an automobile side-view mirror can have a physical property value different from that of another layer. Besides, even though one layer and another layer have an equal physical property value in a separated state, the one layer and the other layer can have different physical property values from each other when the one layer and the other layer are laminated. Hence, since the individual layers of the water-repellent film 10 for an automobile side-view mirror have physical property values different from each other, and the press-forming is performed while heat and pressure are simultaneously applied to the water-repellent film 10 for an automobile side-view mirror, it is not possible to easily predict an accurate springback deformation amount of the water-repellent film 10 for an automobile side-view mirror on which the press-forming is performed through press-forming analysis, and thus the method for manufacturing the die of the present invention needs to be provided.

In the second step S20, the water-repellent film 10 for an automobile side-view mirror is press-formed using the testing die, and thereby the springback deformation amount of the water-repellent film 10 for an automobile side-view mirror can be measured. Here, a three-dimensional shape of the press-formed water-repellent film 10 for an automobile side-view mirror is extracted using non-contact optical measurement, and thereby the springback deformation amount of the water-repellent film 10 for an automobile side-view mirror can be measured. Here, in the second step S20, a method for extracting the three-dimensional shape of the water-repellent film for a side-view mirror can be performed using a contact probe, in addition to the non-contact optical measurement.

As illustrated in FIG. 18, the springback deformation amount of the water-repellent film 10 for an automobile side-view mirror can be measured based on curvature angles θ₁ and θ₂ of a curved part of the water-repellent film 10 for an automobile side-view mirror. Here, θ₁ can represent a curvature angle of a curved part of the water-repellent film 10 for an automobile side-view mirror before the springback deformation occurs, and θ₂ can represent a curvature angle of the curved part of the water-repellent film 10 for an automobile side-view mirror after the springback deformation occurs. Specifically, a change (θ₂ - θ₁) in curvature angle of the water-repellent film 10 for an automobile side-view mirror can be measured to be used as the springback deformation amount. Besides, this can be applied equally to both the case where the testing die is used to press-form the water-repellent film 10 for an automobile side-view mirror and the case where the manufacturing die 220 is used to press-form the water-repellent film.

In the third step S30, press-forming analysis of the water-repellent film 10 for an automobile side-view mirror can be performed to derive a prediction amount of springback deformation of the water-repellent film 10 for an automobile side-view mirror. Here, the physical property value inputted for the press-forming analysis of the water-repellent film 10 for an automobile side-view mirror can include at least one physical property value selected from a frictional force between the water-repellent film 10 for an automobile side-view mirror and the testing die, tensile stress and residual stress of the water-repellent film 10 for an automobile side-view mirror, and curvature of a part of the testing die for press-forming a curved surface of the water-repellent film 10 for an automobile side-view mirror.

Additionally, at least one physical property value selected from a frictional force between the water-repellent film 10 for an automobile side-view mirror and the volume variable body 210 which has a shape corresponding to the testing die and is positioned above the testing die to pressure the water-repellent film 10 for an automobile side-view mirror, lowering speed and pressure of the volume variable body 210, and the number of finite elements for the finite element analysis can be the physical property value inputted for the press-forming analysis of the water-repellent film 10 for an automobile side-view mirror.

The press-forming analysis of the water-repellent film 10 for an automobile side-view mirror can be performed using a finite element analysis program. Here, commercial software in the related art can be used as the finite element analysis program. Besides, when the press-forming analysis of the water-repellent film 10 for an automobile side-view mirror is performed, half symmetry modeling of the water-repellent film 10 for an automobile side-view mirror can be used for efficiency of calculating time of an analysis model. Besides, a finite element can be formed into a hexahedron. However, the shape of the finite element is not limited thereto, modeling of the water-repellent film 10 for an automobile side-view mirror itself can be used, and the shape of the finite element can be formed into another polygon to be used for analysis.

In the fourth step S40, the physical property value inputted for the press-forming analysis of the water-repellent film 10 for an automobile side-view mirror is adjusted such that a derived prediction amount of springback deformation equals to a springback deformation amount of the water-repellent film 10 for an automobile side-view mirror which is press-formed using the testing die, and a physical property value which is inputted for press-forming analysis of the water-repellent film 10 for an automobile side-view mirror is inversely estimated, and thereby an inversely estimated physical property value can be derived. In other words, the inversely estimated physical property value becomes a physical property value obtained by correcting the physical property value first inputted for the press-forming analysis of the water-repellent film 10 for an automobile side-view mirror. This means that making the prediction amount of springback deformation of the water-repellent film 10 for an automobile side-view mirror equal to the springback deformation amount of the water-repellent film 10 for an automobile side-view mirror which is press-formed using the testing die can be a reference of correction.

Besides, when physical property values inputted for the press-forming analysis of the water-repellent film 10 for an automobile side-view mirror are adjusted, a plurality of physical property values can be adjusted in descending order from a physical property value having the largest influence on a change in prediction amount of springback deformation of the water-repellent film 10 for an automobile side-view mirror. The correction is sequentially performed as described above, and thereby a time taken to derive the inversely estimated physical property value can be shortened by first correcting a physical property value to which the prediction amount of springback deformation is most sensitively changed.

In the fifth step S50, the manufacturing die which is a die having a shape obtained by correcting the testing die by reflecting the derived inversely estimated physical property value can be formed.

At this time, before the fifth step S50, the press-forming analysis of the water-repellent film 10 for an automobile side-view mirror can be performed using the inversely estimated physical property value, a prediction amount of springback deformation of the water-repellent film 10 for an automobile side-view mirror can be derived, and thereby it is possible to check whether the springback deformation amount of the water-repellent film 10 for an automobile side-view mirror which is press-formed using the testing die formed by reflecting the inversely estimated physical property value is equal to the prediction amount of springback deformation. Here, the press-forming analysis of the water-repellent film 10 for an automobile side-view mirror can be performed using a finite element analysis program (the details of a finite element analysis program is provided in the description of the finite element analysis program in the third step S30).

Besides, when the springback deformation amount of the water-repellent film 10 for an automobile side-view mirror which is press-formed using the testing die formed by reflecting the inversely estimated physical property value is equal to the prediction amount of springback deformation, the manufacturing die 220 which is a die obtained by correcting the testing die by reflecting the derived inversely estimated physical property value can be formed. Specifically, the manufacturing die 220 is formed to perform the press-forming on the curved part of the water-repellent film 10 for an automobile side-view mirror by reflecting the inversely estimated physical property value of the water-repellent film 10 for an automobile side-view mirror. In addition, the curved surface of the manufacturing die 220 which comes into contact with the curved part of the water-repellent film 10 for an automobile side-view mirror can be formed such that a curvature angle of the curved part of the water-repellent film 10 for an automobile side-view mirror reflects design details of the water-repellent film 10 for an automobile side-view mirror, and the water-repellent film 10 for an automobile side-view mirror has a preset springback deformation amount. A curvature angle of the curved surface of the manufacturing die 220 which comes into contact with the curved part of the water-repellent film 10 for an automobile side-view mirror can be equal to the curvature angle θ₁ of the curved part of the water-repellent film 10 for an automobile side-view mirror before the springback deformation.

Here, the manufacturing die 220 can have an upper step portion 221 of which the top surface is formed as a convex curved surface and a lower step portion which is coupled to a lower part of the upper step portion 221 and of which a side is formed as a flat surface, and the manufacturing die can be formed to have a step such that an area of an undersurface of the upper step portion 221 is larger than an area of a top surface of the lower step portion. The water-repellent film 10 for an automobile side-view mirror is positioned to be in contact with the top surface of the upper step portion 221, the water-repellent film 10 for an automobile side-view mirror is heated by heating the manufacturing die 220. Then, the volume variable body pressures the water-repellent film 10 for an automobile side-view mirror, and thereby the press-forming of the water-repellent film 10 for an automobile side-view mirror can be performed. Here, the curved surface of the water-repellent film 10 for an automobile side-view mirror can be formed by the convex curved surface of the upper step portion 221. In particular, a shape of the upper step portion 221 can be formed into a shape corresponding to the automobile side-view mirror.

The water-repellent film 10 for an automobile side-view mirror can be press-formed using the manufacturing die 220. Besides, the method for manufacturing the die can further include a step of measuring the springback deformation amount of the water-repellent film 10 for an automobile side-view mirror which is press-formed using the manufacturing die 220.

The die can be manufactured by the method for manufacturing the die of the present invention described above. Besides, a multi-layer film press-formed to have a curved surface can be manufactured using the die manufactured as described above. Specifically, the water-repellent film 10 for an automobile side-view mirror can be formed by performing the press-forming using the die manufactured by the method for manufacturing the die of the present invention.

The water-repellent film 10 for an automobile side-view mirror which is formed as described above can be applied on the automobile side-view mirror.

The description of the present invention described above is provided as an example, and a person of ordinary skill in the art to which the present invention pertains can understand that it is possible to easily modify the present invention to another embodiment without changing the technical idea or an essential feature of the present invention. Therefore, the embodiments described above need to be understood as exemplified embodiments and not as embodiments to limit the present invention in every aspect. For example, configurational elements described in a single form can be realized in a distributed manner. Similarly, the configurational elements described in the distributed manner can be realized in a combined manner.

The scope of the present invention needs to be represented by the claims to be described below, and meaning and the scope of the claims and every modification or modified embodiment derived from an equivalent concept of the claims need to be construed to be included in the scope of the present invention.

### [Reference Signs List]

- 10:: Water-Repellent Film for Automobile Side-View Mirror
- 11:: Lining Layer
- 12:: Adhesive Layer
- 13:: Substrate Layer
- 14:: Coating Layer
- 15:: Protective Layer
- 100:: Press Head Unit
- 110:: Press Head
- 120:: Fluid Controller
- 130:: Screw Shaft
- 140:: Vertically Moving Body
- 150:: Press Motor
- 160:: Press Frame
- 161:: First Guide Shaft
- 162:: Second Guide Shaft
- 163:: Third Guide Shaft
- 164:: Fourth Guide Shaft
- 165:: Screw Guide Body
- 170:: Press-Head Guide Shaft
- 210:: Volume Variable Body
- 220:: Die
- 221:: Upper Step Portion
- 300:: Film Aligning Unit
- 310:: Suction Bed
- 321:: First Aligning Cylinder
- 322:: Second Aligning Cylinder
- 331:: First Film Aligning Body
- 332:: Second Film Aligning Body
- 400:: Pick-up Unit
- 410:: First Pick-up Machine
- 420:: Attaching/Detaching Cylinder
- 430:: First Pick-up Machine Transferring Cylinder
- 440:: Ejector
- 500:: Pick-up Cooling Unit
- 510:: Front-Rear Transferring Cylinder
- 520:: Second Pick-up Machine
- 530:: Second Pick-up Machine Transferring Cylinder
- 600:: First Collecting Unit
- 610:: First Collecting Motor
- 620:: First Collecting Body
- 630:: First Collection Sensor
- 640:: First Collecting Frame
- 700:: Second Collecting Unit
- 710:: Second Collecting Motor
- 720:: Second Collecting Body
- 730:: Second Collection Sensor
- 740:: Second Collecting Frame
- 800:: Clamp Unit
- 810:: Clamp
- 820:: Clamp Support
- 830:: Clamp Screw Shaft
- 840:: Clamp Motor
- 850:: Clamp Sensor
- 910:: Heating Unit
- 920:: Apparatus Frame
- 921:: Pick-up Unit Guide

## Claims

1. A water-repellent film for an automobile side-view mirror, comprising:
a substrate layer provided to adhere to the side-view mirror;
an adhesive layer that is formed under the substrate layer and has adhesion such that the substrate layer adheres to the side-view mirror; and
a coating layer that is laminated on the substrate layer.

2. The water-repellent film for an automobile side-view mirror according to claim 1,
wherein the substrate layer has a thickness of 8 µm to 500 µm.

3. The water-repellent film for an automobile side-view mirror according to claim 1,
wherein the adhesive layer has a thickness of 1 µm to 250 µm.

4. The water-repellent film for an automobile side-view mirror according to claim 1,
wherein the coating layer is provided as a hard coating layer and has a thickness of 0.1 µm to 25 µm.

5. The water-repellent film for an automobile side-view mirror according to claim 1, further comprising:
a lining layer that is formed under the adhesive layer,
wherein the lining layer has a thickness of 8 µm to 500 µm.

6. The water-repellent film for an automobile side-view mirror according to claim 1, further comprising:
a protective layer that is laminated on the coating layer,
wherein the protective layer has a thickness of 8 µm to 500 µm.

7. A press-forming apparatus of the water-repellent film for an automobile side-view mirror according to claim 1, the press-forming apparatus comprising:
a die that press-forms the water-repellent film for an automobile side-view mirror;
a press head unit that is positioned to correspond to the die and is separated from the die by a variable distance; and
a volume variable body that is coupled to the press head unit and has elasticity such that a volume of the volume variable body varies due to inflow and outflow of a fluid by the press head unit,
wherein the volume variable body comes into contact with the water-repellent film for an automobile side-view mirror which is positioned on the die depending on a volume change of the volume variable body and applies pressure to the water-repellent film for an automobile side-view mirror such that the water-repellent film for an automobile side-view mirror is press-formed into a 3D shape.

8. The press-forming apparatus of the water-repellent film for an automobile side-view mirror according to claim 7,
wherein the volume variable body is configured to apply pressure to the die and a curved part of the water-repellent film for an automobile side-view mirror and three-dimensionally press-form the water-repellent film by being partially expanded with inflow of a part of fluid, before coming into contact with the water-repellent film for an automobile side-view mirror, then, by coming into contact with the water-repellent film for an automobile side-view mirror, and by being expanded with inflow of a remaining fluid after the contact with the water-repellent film for an automobile side-view mirror.

9. A method for manufacturing a die of the press-forming apparatus of the water-repellent film for an automobile side-view mirror according to claim 7, the method comprising:
i) a step of preparing the water-repellent film for an automobile side-view mirror and preparing a testing die which is a die for a press-forming test of the water-repellent film for an automobile side-view mirror;
ii) a step of measuring a springback deformation amount of the water-repellent film for an automobile side-view mirror by press-forming the water-repellent film for an automobile side-view mirror by using the testing die;
iii) a step of deriving a prediction amount of springback deformation of the water-repellent film for an automobile side-view mirror by performing press-forming analysis on the water-repellent film for an automobile side-view mirror and the testing die;
iv) a step of deriving inversely estimated physical property value by inversely estimating a physical property value which is inputted for press-forming analysis of the water-repellent film for an automobile side-view mirror by adjusting a physical property value inputted for the press-forming analysis of the water-repellent film for an automobile side-view mirror such that the derived prediction amount of springback deformation equals to a springback deformation amount of the water-repellent film for an automobile side-view mirror which is press-formed using the testing die; and
v) a step of forming a manufacturing die which is a die having a shape obtained by correcting the testing die by reflecting the derived inversely estimated physical property value.

10. The method for manufacturing a die of the press-forming apparatus of the water-repellent film for an automobile side-view mirror according to claim 9,
wherein, in the step of ii), a springback deformation amount of the water-repellent film for an automobile side-view mirror is measured by extracting a three-dimensional shape of the press-formed water-repellent film for an automobile side-view mirror by using non-contact optical measurement or a contact probe.
